# FASCICULE DE BREVET EUROPEEN

(11) **EP 2 362 193 B1**
(45) Date de publication et mention de la délivrance du brevet: **09.11.2016**
(21) Numéro de dépôt: 11150167.2
(22) Date de dépôt: 05.01.2011
(51) Int. Cl.: G01F 25/00, B67D 7/08

(54) **Dispositif de jaugeage d'un appareil distributeur de carburant liquide ainsi que procédé mis en oeuvre lors de l'utilisation d'un tel dispositif**
Füllstandsmesser für flüssigbrennstoff-zapfgerät und verfahren, das anlässlich der verwendung eines solchen füllstansmessers eingesetzt wird
Gauging device for liquid fuel dispenser and method implemented by using this device

(30) Priorité: 25.01.2010 FR 1050463
(43) Date de publication de la demande: 31.08.2011
(73) Titulaire: Tokheim Services Group S.à r.l., 1950 Luxembourg (LU)
(72) Inventeur: Cloutier, Philippe, 14320 May-sur-Orne (FR); Magnier, Pierre, 14540 Conteville (FR)
(74) Mandataire: Livet, Marie-José

(56) Documents cités:
- WO-A1-2004/070327
- WO-A1-2005/100932
- DE-C1- 19 627 269

## Description

La présente invention a pour objet un dispositif de jaugeage d'un appareil distributeur de carburant liquide, en particulier d'essence.

Un tel appareil distributeur de carburant est classiquement d'une part branché sur un circuit de distribution de carburant relié à une cuve de stockage et d'autre part équipé d'un mesureur volumétrique (généralement à pistons à course réglable) coopérant avec un afficheur ainsi que d'un tuyau flexible d'alimentation en carburant relié à un pistolet distributeur muni d'un embout.

Les documents DE 196 27 269 C1, WO 2005/100932 A1 et WO 2004/070327 A1 décrivent de tels appareils distributeur de carburant.

Ces appareils distributeurs de carburant doivent être soumis régulièrement à des opérations de jaugeage pour satisfaire aux exigences de la métrologie légale.

Pour la mise en oeuvre de ces opérations de jaugeage, on utilise des dispositifs de jaugeage comportant essentiellement une jauge comprenant un corps de jauge de volume prédéfini ainsi qu'un col de jauge équipé d'une graduation et dans lequel l'embout du pistolet distributeur peut être inséré pour permettre de remplir la jauge de carburant.

Lors de l'opération de jaugeage, on insère l'embout du pistolet distributeur dans le col de jauge et on verse du carburant dans la jauge jusqu'à la graduation située sur le col de celle-ci.

On lit ensuite le volume ainsi introduit dans la jauge sur cette graduation et on compare ce volume lu au volume affiché sur l'appareil distributeur.

En cas de différence entre ces deux volumes, on actionne des moyens d'ajustement du mesureur volumétrique (des roues dentelées qui permettent de régler la course des pistons dans le cas d'un mesureur volumétrique à pistons) qui permettent de régler le volume cyclique du mesureur équipant l'appareil distributeur de façon à obtenir l'égalité de ces volumes.

Or, on s'est rendu compte, conformément à l'invention, que le volume lu sur la graduation équipant le col de jauge est en fait inférieur au volume de carburant réellement déversé dans celle-ci du fait de pertes non négligeables consécutives au jeu existant entre l'embout du pistolet distributeur et les parois du col de jauge.

Cette absence d'étanchéité à ce niveau entraîne plus précisément deux sources de pertes.

La première de ces sources de pertes est liée au fait que la pression atmosphérique est inférieure à la pression de vapeur saturante du carburant, c'est-à-dire à la pression d'équilibre entre le carburant en phase liquide et le carburant en phase vapeur.

Lors d'une opération de jaugeage, la partie interne de la jauge est initialement remplie d'air se trouvant à la pression atmosphérique.

Au cours du remplissage, une certaine proportion du carburant liquide déversé s'évapore pour permettre de maintenir l'équilibre de pression.

Il en résulte que la quantité d'air refoulée vers l'extérieur lors du remplissage de la jauge par le jeu existant entre l'embout du pistolet distributeur et les parois du col de jauge, (qui correspond au volume de carburant déversé), renferme obligatoirement une proportion non négligeable de carburant en phase vapeur.

La seconde source de pertes de carburant est liée au fait que, lors de chaque opération de jaugeage, il se produit autour du jet de carburant sortant de l'embout du pistolet distributeur une brumisation pouvant engendrer des gouttelettes de nature à s'évaporer ou à être évacuées hors de la jauge avec l'air refoulé lors du remplissage, par le jeu existant entre les parois du col de jauge et le pistolet distributeur.

De telles pertes qui affectent principalement l'essence traditionnelle, nettement plus volatile que le carburant diesel, dépendent de divers paramètres, en particulier du processus de mouillage de la jauge, de la nature du carburant distribué, de la température et de la saison ; elles peuvent s'élever jusqu'à 3/1000 de la quantité de carburant distribué dans le cas d'une jauge de 20 litres, ce qui entraîne des pertes importantes pour les gérants des stations-services, du fait d'un réglage erroné des mesureurs des appareils distributeurs.

La présente invention a pour objet de remédier à cet inconvénient en proposant un dispositif de jaugeage d'un appareil distributeur de carburant liquide du type susmentionné de nature à supprimer ou à tout le moins à réduire dans une large mesure les pertes de carburant pendant une opération de jaugeage.

Dans ce but, on a eu l'idée conformément à l'invention de maintenir l'étanchéité entre l'embout du pistolet distributeur et les parois du col de jauge pendant une opération de jaugeage, et également de maintenir constamment, pendant une telle opération, la partie interne de la jauge, c'est-à-dire le ciel de jauge surmontant le carburant distribué à la pression de saturation dans les conditions de température et de pression applicables à la mesure.

A cet effet, l'invention concerne un dispositif de jaugeage d'un appareil distributeur de carburant liquide dans lequel le col de jauge est équipé à son extrémité libre d'un élément connecteur permettant de garantir l'étanchéité entre l'atmosphère et la partie interne de la jauge, en particulier après insertion de l'embout distributeur dans le col de jauge.

Selon l'invention, la jauge est en outre reliée par l'intermédiaire d'une conduite de liaison, de préférence équipée d'une vanne d'obturation à un réservoir additionnel renfermant des vapeurs de carburant.

De plus, l'ensemble constitué par la jauge et le réservoir additionnel est équipé d'une prise d'air d'équilibrage arrangée pour relier le ciel de jauge avec l'atmosphère et munie d'une vanne d'obturation, cette prise d'air d'équilibrage étant située à la partie supérieure du réservoir additionnel ou sur la conduite de liaison.

La présence d'une telle prise d'air est en effet indispensable pour permettre la mise en oeuvre des opérations de remplissage et de vidage de la jauge.

Le corps de jauge peut avantageusement être équipé d'une ouverture de sortie pouvant être fermée par une vanne de vidage de jauge.

Il est à noter que la conduite de liaison peut être branchée au niveau du col de jauge ou à un endroit quelconque de la jauge, voire au niveau de l'ouverture de sortie de celle-ci.

Dans la pratique, il est toutefois particulièrement avantageux de brancher la conduite de liaison sur l'embout connecteur.

Dans ce cas et selon une autre caractéristique de l'invention, l'élément connecteur est de préférence constitué par un bouchon, notamment en matériau synthétique, percé d'une part d'un orifice traversant, notamment équipé d'un joint à lèvres, destiné à recevoir l'embout du pistolet distributeur, et d'autre d'un canal coudé permettant de relier la conduite de liaison à la partie interne de la jauge.

Selon une autre caractéristique de l'invention, l'élément connecteur est associé à un tube plongeur destiné à recevoir l'embout du pistolet distributeur et équipé, à son extrémité supérieure, d'au moins un trou de dégazage, et à son extrémité inférieure, d'un coudage permettant de projeter le jet de carburant liquide distribué contre les parois du corps de jauge pour lui imprimer un mouvement rotationnel pour éviter que le jet ne crée de la mousse sur la surface du volume de carburant liquide (effet d'agitation).

La présence d'un tel élément connecteur permet de diminuer la brumisation autour du jet de carburant liquide pénétrant dans la jauge et par suite la formation de fines gouttelettes propres à s'évaporer et à sortir du col de jauge, et parallèlement de diminuer la formation de mousse dans la zone de turbulences située à l'entrée du jet dans le carburant liquide et ainsi l'évaporation de ce carburant.

Plus précisément, l'insertion de l'embout du pistolet distributeur dans l'ouverture de l'élément connecteur fait que le jet de liquide sortant de cet embout se trouve toujours à la partie interne de la jauge, sans être en contact avec l'extérieur.

La brumisation se produit toujours autour du jet, bien qu'elle soit en partie atténuée par l'atmosphère saturée dans le ciel de jauge du fait de l'étanchéité de l'élément connecteur par rapport à l'atmosphère extérieure, mais les gouttelettes ne peuvent en aucun cas sortir de la jauge.

L'élément connecteur étanche assure ainsi deux fonctions, à savoir maintenir le ciel de juge saturé de vapeurs, évitant qu'elles s'échappent à l'extérieur et éviter que les gouttelettes ne sortent de la jauge.

Le tube plongeur permet quant à lui de diminuer la formation de mousse à la surface du volume de carburant liquide distribué dans le corps de jauge ; la formation de mousse favorise en effet le processus d'évaporation du carburant.

De plus, les trous de dégazage qui doivent nécessairement déboucher dans la phase gazeuse surmontant le carburant liquide introduit dans la jauge permettent l'évacuation des vapeurs de carburant pouvant se former lorsque le niveau de carburant parvient à l'ouverture de sortie de ce tube.

En effet, en l'absence de tels trous de dégazage, ces vapeurs ne pourraient pas s'échapper du fait de l'étanchéité existant entre l'élément connecteur et l'embout du pistolet distributeur.

Selon une caractéristique préférentielle de l'invention, le réservoir additionnel est réalisé en un matériau non déformable et résistant aux vapeurs de carburant.

Il est en effet essentiel conformément à l'invention, que le réservoir additionnel ne puisse pas être percé par un objet tranchant ou par un frottement prolongé sur une surface rugueuse, ce qui serait par exemple le cas si ce réservoir était constitué par un soufflet de toile.

Ce réservoir ne doit en outre pas pouvoir être endommagé suite à une attaque chimique par des vapeurs d'hydrocarbures dans la mesure où il est rempli de vapeurs de carburant provenant de carburants à base de pétrole mais également de biocarburants à base d'alcools.

Il s'agit là d'une caractéristique essentielle de l'invention : en effet, si le réservoir additionnel était percé, des vapeurs de carburant pourraient se dissoudre dans l'air environnant et conduire à la formation d'un mélange explosif ayant une concentration en vapeurs d'hydrocarbures comprise entre la limite inférieure d'explosivité et la limite supérieure d'explosivité.

Pour cette raison, il est nécessaire de s'assurer que les vapeurs de carburant renfermées dans le réservoir additionnel ne puissent pas risquer de se mélanger avec l'air environnant.

Selon une première variante de l'invention, la conduite de liaison débouche à la partie inférieure du réservoir additionnel et est de préférence équipée d'un réservoir de récupération de carburant liquide.

Conformément à cette première variante de l'invention, la prise d'air d'équilibrage est située à la partie supérieure du réservoir additionnel.

Ce réservoir qui est ainsi en contact avec l'atmosphère par la prise d'air d'équilibrage est rempli d'air et de carburant gazeux.

Le carburant qui est un gaz lourd stagne à sa partie inférieure tandis que l'air se rassemble à sa partie supérieure.

Entre ces deux zones, il se crée à la partie médiane du réservoir additionnel une zone de gradient renfermant un mélange d'air et de carburant.

Selon une seconde variante de l'invention, le réservoir additionnel contient un volume prédéfini de carburant liquide.

Conformément à cette seconde variante de l'invention, la conduite de liaison est équipée de la prise d'air d'équilibrage et débouche à la partie supérieure du réservoir additionnel, au niveau des vapeurs de carburant créées par évaporation dans le ciel de ce réservoir.

Selon une autre caractéristique de cette seconde variante de l'invention, le réservoir additionnel est équipé d'une prise d'air additionnelle plongeant dans le carburant qui y est contenu et pouvant être fermée par une vanne d'obturation.

Il est à noter que conformément à cette seconde variante de l'invention, le réservoir additionnel peut en outre être muni d'une ouverture de remplissage de carburant équipée d'une vanne d'obturation et/ou d'une ouverture de vidage de carburant équipée elle aussi d'une vanne d'obturation.

Selon une autre caractéristique particulièrement avantageuse concernant la première variante et la seconde variante de l'invention, la prise d'équilibrage et le cas échéant la prise d'air additionnelle est(sont) équipée(s) d'un élément pare-flammes.

Il est en effet à noter que le dispositif conforme à l'invention a été conçu pour empêcher toute entrée d'air, donc garantir la sécurité.

Il est toutefois impossible d'exclure des dysfonctionnements pouvant être sources de fuites ou une mauvaise manipulation d'un technicien de maintenance.

Or, si de l'air pénètre dans le réservoir additionnel et se mélange avec les vapeurs de carburant renfermées dans ce réservoir, il peut y avoir un risque d'inflammation ou d'explosion.

Le montage d'éléments pare-flammes aux extrémités de la ou des prise(s) d'air permet d'exclure ce risque en empêchant que toute flamme créée à l'extérieur ne puisse rentrer dans le réservoir additionnel.

Selon une autre caractéristique particulièrement avantageuse de l'invention, les vannes d'obturation sont des vannes commandées reliées à un élément de contrôle électronique qui en contrôle l'ouverture et la fermeture.

Cette caractéristique qui s'applique aussi bien à la première qu'à la seconde variante de l'invention permet de faciliter dans une large mesure le travail du technicien de maintenance chargé du jaugeage.

L'élément de contrôle électronique permet en effet de contrôler l'ouverture et la fermeture de chacune des vannes d'obturation auxquelles il est relié.

Selon un premier mode de réalisation, cet élément est équipé de boutons pouvant être actionnés par le technicien de maintenance, chacun de ces boutons étant attribué au contrôle de l'ouverture et de la fermeture d'une vanne d'obturation donnée.

Selon un second mode de réalisation, l'élément de contrôle électronique est en outre équipé d'un ou de plusieurs éléments indicateurs indiquant au technicien de maintenant quel(s) bouton(s) doit(doivent) être actionné(s) afin de mettre en oeuvre les différentes opérations nécessaires à l'utilisation du dispositif.

Cet ou ces éléments indicateurs peuvent à titre d'exemple être constitués par un écran LCD précisant quelle vanne doit être actionnée (dans le sens de l'ouverture ou dans le sens de la fermeture) ou encore des boutons rétro-éclairés permettant d'éclairer le ou les bouton(s) devant être actionné(s).

Selon un troisième mode de réalisation, l'élément de contrôle électronique commande automatiquement les ouvertures et fermetures de chacune des vannes d'obturation selon la succession de différentes étapes nécessaires à l'utilisation du dispositif.

L'intérêt d'un tel élément de contrôle électronique consiste à faciliter le travail du technicien de maintenance chargé de l'opération de jaugeage en lui permettant d'une part de disposer d'un élément unique pour contrôler l'ensemble des vannes commandées et d'autre part d'avoir une indication des opérations à réaliser, qui comme il sera décrit plus en détail dans la suite de cet exposé, sont multiples et doivent être mises en oeuvre dans un ordre très précis.

La présente invention concerne également un procédé mis en oeuvre lors de l'utilisation d'un dispositif de jaugeage d'un appareil distributeur de carburant tel que décrit ci-dessus.

Selon ce procédé, lors d'une étape préliminaire, on remplit la jauge et le réservoir additionnel de vapeurs de carburant puis on isole la jauge et le réservoir additionnel l'un de l'autre et vis-à-vis de l'atmosphère.

La jauge et le réservoir additionnel sont ainsi conservés à la pression de vapeur saturante du carburant pour le jaugeage suivant.

Cette étape préliminaire ayant été effectuée, on peut alors mettre en oeuvre une opération de jaugeage proprement dite.

Lors d'une telle opération de jaugeage, on insère l'embout du pistolet distributeur dans le col de jauge équipé de l'élément connecteur, puis on ouvre la vanne d'obturation de la prise d'air d'équilibrage et on relie la jauge à l'atmosphère

On remplit ensuite la jauge de carburant de sorte que les vapeurs de carburant déplacées soient évacuées par la prise d'air d'équilibrage.

Il est à noter que cette prise d'air d'équilibrage peut avantageusement être connectée au système de récupération des vapeurs de carburant dans la mesure où l'appareil distributeur est équipé d'un tel système.

Ce remplissage ayant été effectué, on lit le volume ainsi introduit dans la jauge sur la graduation équipant le col de jauge et on compare ce volume lu au volume affiché sur l'afficheur de l'appareil distributeur de façon à pouvoir régler la course des pistons du mesureur en cas de différence entre ces volumes.

A la fin d'une opération de jaugeage, il est nécessaire de vider la jauge afin de pouvoir réitérer une telle opération.

Cette étape de vidage de la jauge est effectuée de sorte que les vapeurs de carburant renfermées dans le réservoir additionnel pénètrent dans celle-ci.

Il n'y a alors plus qu'à isoler la jauge et le réservoir additionnel l'un de l'autre et vis-à-vis de l'atmosphère pour effectuer une nouvelle opération de jaugeage.

Il est à noter que conformément à l'invention, le vidage de la jauge peut être effectué par l'ouverture de sortie de celle-ci dans la mesure où elle est équipée d'une telle ouverture, ou, dans le cas contraire, par le col de jauge après inclinaison de la jauge.

Si l'on utilise un dispositif conforme à la première variante de l'invention, pour effectuer un jaugeage, il est nécessaire d'ouvrir préalablement la vanne d'obturation de la conduite de liaison de sorte que les vapeurs de carburant déplacées lors du remplissage de la jauge soient refoulées vers le réservoir additionnel puis évacuées par la prise d'air d'équilibrage.

Dans la mesure où la jauge était initialement saturée en carburant, le carburant liquide introduit dans celle-ci ne s'évapore pas.

Au cours du vidage subséquent de la jauge, le carburant évacué crée une dépression et le volume ainsi libéré dans la jauge est remplacé par des vapeurs saturées provenant du fond du réservoir additionnel.

Il est à noter que, conformément à cette première variante de l'invention, le réservoir additionnel doit obligatoirement avoir une capacité supérieure à celle de la jauge, de sorte qu'il puisse toujours renfermer un volume de vapeurs saturées en carburant égal au volume total de la jauge, ce afin de garantir que cette dernière puisse être totalement remplie de vapeurs saturées en carburant lors de l'étape de vidage.

Le carburant pouvant s'être condensé au cours de cette étape peut éventuellement être récupéré dans le réservoir de récupération de carburant, dans la mesure où la conduite de liaison est équipée d'un tel réservoir.

Il est à noter que conformément à cette première variante de l'invention, la jauge doit impérativement être équipée d'une ouverture de sortie pour permettre la mise en oeuvre de l'étape de vidage.

Si l'on utilise un dispositif conforme à la seconde variante de l'invention, au cours de l'étape préliminaire, on introduit dans le réservoir additionnel un volume prédéfini de carburant liquide de façon à créer, par évaporation des vapeurs saturées en carburant dans le ciel de ce réservoir.

Conformément à cette seconde variante de l'invention, lors d'un jaugeage, la vanne d'obturation équipant la conduite de liaison demeure fermée de sorte que le réservoir additionnel soit isolé de la jauge.

Par suite, pendant le remplissage de la jauge par du carburant, les vapeurs contenues dans celle-ci sont évacuées à l'air libre par la prise d'air d'équilibrage.

Dans la mesure où la jauge était initialement saturée en carburant, le carburant liquide introduit dans celle-ci ne s'évapore pas.

Au cours du vidage subséquent de la jauge, on ferme la vanne d'obturation de la prise d'air d'équilibrage et on ouvre la vanne d'obturation de la conduite de liaison ainsi que la vanne d'obturation de la prise d'air d'équilibrage.

Le carburant crée une dépression et le volume ainsi libéré dans la jauge est remplacé par des vapeurs saturées provenant du réservoir additionnel.

L'air aspiré de l'extérieur par la prise d'air additionnelle suite à l'équilibrage des pressions est parallèlement introduit sous forme de bulles dans le carburant liquide renfermé dans le réservoir additionnel où il se sature en vapeurs de carburant.

Le gaz aspiré dans la jauge, lors de l'étape de vidage de celle-ci, est ainsi saturé en carburant.

Il est à noter que cette seconde variante de l'invention autorise l'utilisation de jauges non équipées d'une ouverture de sortie, le carburant introduit lors du jaugeage pouvant être vidé par le col de jauge en inclinant la jauge.

Les caractéristiques du dispositif de jaugeage ainsi que du procédé qui font l'objet de l'invention seront décrites plus en détail en se référant aux dessins non limitatifs annexés dans lesquels :
- la figure 1 représente un dispositif de jaugeage conforme à l'art antérieur,
- la figure 2 représente un dispositif de jaugeage conforme à la première variante de l'invention,
- la figure 3 représente un dispositif de jaugeage conforme à la seconde variante de l'invention,
- les figures 4a et 4b sont respectivement des vues en perspective et en coupe d'un élément connecteur,
- la figure 5 représente schématiquement un élément connecteur équipé d'un tube plongeur.

Il est à noter que sur les figures, les éléments similaires sont désignés par les mêmes références.

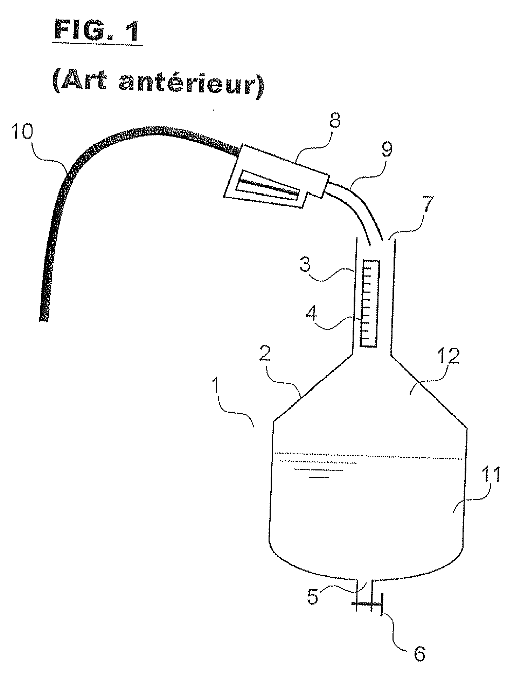

Selon la figure 1, un dispositif de jaugeage conforme à l'art antérieur est essentiellement constitué par une jauge 1 de contenance prédéfinie comportant un corps de jauge 2 et un col de jauge 3 muni d'une ouverture d'entrée 7.

Cette ouverture d'entrée 7 est destinée à recevoir l'embout 9 du pistolet distributeur 8 monté à l'extrémité du tuyau flexible 10 d'alimentation en carburant liquide d'un appareil distributeur à jauger de façon à permettre le remplissage de la jauge 1.

Le corps de jauge 2 est équipé à sa partie inférieure d'une ouverture de sortie 5 pouvant être fermée par une vanne de vidage de jauge manuelle 6.

Le col de jauge 3 est quant à lui équipé d'une graduation transparente 4 permettant à un technicien de maintenance de lire le volume de carburant liquide 11 déversé lors d'un jaugeage.

L'ouverture d'entrée 7 du col de jauge 3 a un diamètre supérieur à celui de l'embout 9 du pistolet distributeur 8 de sorte qu'il subsiste ainsi entre cet embout 9 et les parois du col de jauge 3 le jeu nécessaire au remplissage de la jauge 1.

Lors de ce remplissage, le ciel de jauge 12 se remplit d'un mélange d'air et de carburant liquide évaporé pouvant être évacué par ce jeu.

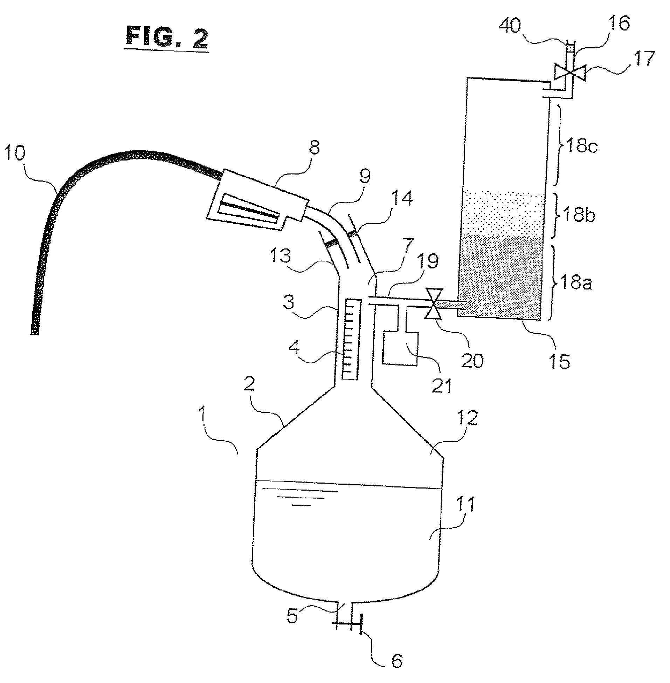

Selon la figure 2, le col de jauge 3 se prolonge par un support 13 pour l'embout 9 du pistolet distributeur 8, de forme coudée et est équipé à ce niveau d'un élément connecteur 14 permettant de garantir l'étanchéité entre l'atmosphère et la partie interne de la jauge 1, en particulier après insertion de l'embout 9 dans le col de jauge 3.

La jauge 1 est par ailleurs reliée à un réservoir additionnel 15 renfermant des vapeurs de carburant par une conduite de liaison 19 équipée d'un réservoir de récupération de carburant liquide 21 ainsi que d'une vanne d'obturation commandée 20.

La conduite de liaison 19 débouche à la partie inférieure du réservoir additionnel 15.

Ce réservoir 15 est en outre équipé à sa partie supérieure d'une prise d'air d'équilibrage 16 pouvant être fermée par une vanne commandée 17 et équipée d'un élément pare-flammes 40.

Le jaugeage d'un appareil distributeur en utilisant le dispositif représenté sur la figure 2 s'effectue de la manière suivante.

Lors d'une étape préliminaire, en règle générale effectuée en usine, on remplit la jauge 1 et le réservoir additionnel 15 de vapeurs de carburant.

La jauge 1 se trouve ainsi à la pression de vapeur saturante du carburant.

On isole ensuite la jauge 1 et le réservoir additionnel 15 l'un de l'autre et vis-à-vis de l'atmosphère en fermant les vannes 6, 20 et 17.

Lors d'une opération de jaugeage, on insère l'embout 9 du pistolet distributeur 8 dans le col de jauge 3 équipé de l'élément connecteur 14 de façon à permettre de déverser du carburant liquide 11 dans la jauge 1 en assurant l'étanchéité entre l'élément connecteur 14 et l'embout 9 du pistolet distributeur 8 puis on ouvre les vannes 20 et 17.

Pendant ce remplissage, les vapeurs contenues dans le ciel de jauge 12 sont chassées vers le réservoir additionnel 15 et le surplus est évacué par la prise d'air 16.

Dans la mesure où la jauge 1 était initialement saturée en carburant, le carburant liquide introduit dans celle-ci ne s'évapore pas.

Pour vider ensuite la jauge 1, on ouvre la vanne 6, alors que les vannes 20 et 17 sont toujours ouvertes.

Le carburant 11 évacué par l'ouverture de sortie 5 crée une dépression et le volume ainsi libéré est remplacé par des vapeurs de carburant provenant du réservoir additionnel 15.

Le carburant ayant pu condenser est récupéré dans le réservoir de récupération 21.

Lorsque la jauge 1 est entièrement vidée et égouttée, on ferme les vannes 6, 20 et 17.

La jauge 1 est ainsi maintenue à la pression de vapeur saturante du carburant dans l'attente d'un jaugeage ultérieur.

Il est à noter que dans un dispositif tel que représenté sur la figure 2, le réservoir additionnel 15 comporte constamment à sa partie inférieure une zone 18a remplie de vapeurs saturées en carburant qui, plus lourdes que l'air, stagnent au niveau de son fond, et à sa partie supérieure, une zone 18c en contact avec l'atmosphère par la prise d'air d'équilibrage 16 qui est remplie d'air à la pression atmosphérique.

Ces deux zones 18a, 18c sont séparées à la partie médiane du réservoir additionnel 15 par une zone à gradient 18b.

Il est ainsi nécessaire que le réservoir additionnel 15 ait une capacité supérieure à celle de la jauge 1 de manière à pouvoir disposer en permanence à la partie inférieure de ce réservoir d'un volume 18a de vapeurs saturées en carburant au moins égal au volume total de la jauge 1 pouvant être transféré dans celle-ci lors de son vidage.

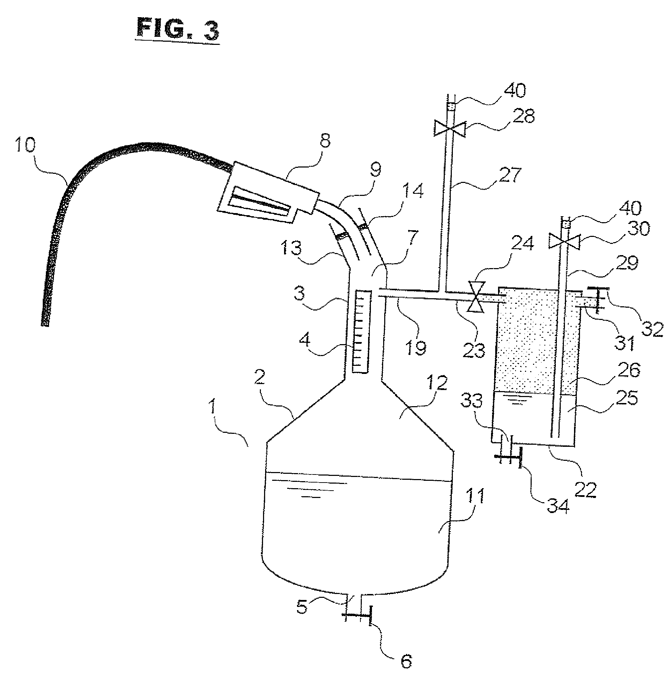

Selon la figure 3, la jauge 1 est reliée par une conduite de liaison 19 se prolongeant par une conduite de liaison 23 équipée d'une vanne d'obturation commandée 24 à la partie supérieure d'un réservoir additionnel 22 contenant un volume prédéfini de carburant liquide 25.

La conduite de liaison 19 est équipée d'une prise d'air d'équilibrage 27 pouvant être fermée par une vanne commandée 28 et équipée d'un élément pare-flammes 40.

Le réservoir additionnel 22 est quant à lui équipé d'une prise d'air additionnelle 29 plongeant dans le carburant liquide 25 qui y est contenu et pouvant être fermée par une vanne d'obturation commandée 30.

Cette prise d'air additionnelle 29 est elle aussi équipée d'un élément pare-flammes 40.

Le réservoir additionnel 22 est en outre muni d'une ouverture de remplissage en carburant 31 équipée d'une vanne manuelle 32 ainsi que d'une ouverture de vidage de carburant 33 équipée d'une vanne manuelle 34.

Le jaugeage d'un appareil distributeur en utilisant le dispositif représenté sur la figure 3 s'effectue de la manière suivante.

Lors d'une étape préliminaire, on remplit d'une part la jauge 1 de vapeurs de carburant et d'autre part le réservoir additionnel 22 de quelques litres de carburant liquide 26.

La jauge 1 se trouve ainsi à la pression de vapeur saturante du carburant alors que le ciel du réservoir additionnel 22 se remplit par évaporation de vapeurs 26 saturées en carburant surmontant le carburant liquide 25.

On isole ensuite la jauge 1 et le réservoir additionnel 22 l'un de l'autre et vis-à-vis de l'atmosphère en fermant les vannes 6, 24, 28 et 30.

Lors d'une opération de jaugeage, on insère l'embout 9 du pistolet distributeur 8 dans le col de jauge 3 équipé de l'élément connecteur 14 de façon à permettre de déverser du carburant liquide 11 dans la jauge 1, puis on ouvre la vanne commandée 28

Pendant ce remplissage, les vapeurs contenues dans le ciel de jauge 12 sont chassées par la prise d'air d'équilibrage 27 et évacuées à l'air libre.

Dans la mesure où la jauge 1 était initialement saturée en carburant, le carburant liquide introduit dans celle-ci ne s'évapore pas.

Pour vider ensuite la jauge 1, on ferme la vanne 28 et on ouvre les vannes 24, 30 et 6.

Le carburant évacué par l'ouverture de sortie 5 crée une dépression et le volume ainsi libéré est remplacé par des vapeurs de carburant 26 provenant du réservoir additionnel 22.

Simultanément, de l'air est aspiré de l'extérieur par la prise d'air additionnelle 29 et transféré dans le carburant liquide 25 sous forme de bulles qui se chargent de vapeurs de carburant de sorte que les vapeurs aspirées dans la jauge 1 lors du vidage de celle-ci soient saturées en carburant.

Lorsque la jauge 1 est entièrement vidée et égouttée, on ferme les vannes 6, 24 et 30.

La jauge 1 et le réservoir additionnel 22 sont ainsi maintenus à la pression de vapeur saturante du carburant dans l'attente d'un jaugeage ultérieur.

Il convient de noter que, de façon non représentée, le prolongement 23 de la conduite de liaison 19 pourrait être branché sur l'ouverture de sortie 5 de la jauge par l'intermédiaire d'un raccord additionnel de sorte que le dispositif ne comporte plus en sortie qu'une seule vanne commandée remplaçant les vannes 6 et 24.

Conformément à une telle variante, lors de l'étape de vidage de la jauge 1, les vapeurs saturées en carburant provenant du réservoir additionnel 22 pénétreraient sous forme de bulles dans le carburant 11 contenu dans la jauge 1.

Il convient également de noter que de façon là encore non représentée, la jauge 1 pourrait être constituée par une jauge à vidage manuel dépourvue d'ouverture de sortie.

Dans un tel cas, lors de l'étape de vidage, le technicien de maintenance devrait incliner la jauge 1 et évacuer le carburant 11 renfermé dans celle-ci par l'ouverture d'entrée 7.

Le vidage de la jauge 1 d'un dispositif tel que représenté sur la figure 3, ainsi modifié s'effectuerait alors de la manière suivante.

La première étape consisterait à connecter de manière étanche l'ouverture 7 du col de jauge 3 à la conduite de liaison 19, 23 reliée au réservoir additionnel 22.

La seconde étape consisterait à ouvrir les vannes 24 et 30 et à incliner la jauge 1 pour permettre de la vider par son ouverture d'entrée 7.

Les vapeurs saturées en carburant provenant du réservoir additionnel 22 seraient alors refoulées par l'ouverture 7 vers l'intérieur de la jauge 1 sous forme de bulles.

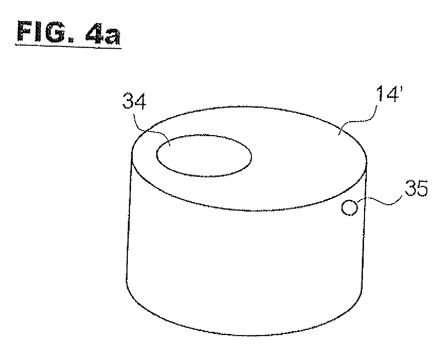

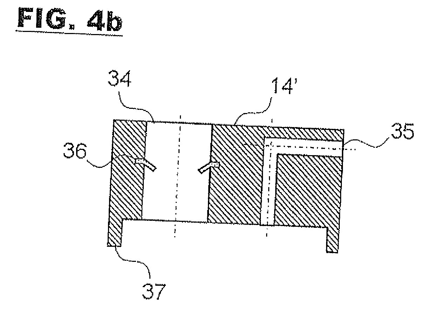

Selon les figures 4a et 4b, l'élément connecteur est constitué par un bouchon en matériau synthétique 14' équipé d'un épaulement d'assemblage 37 à sa périphérie et percé d'une part, d'un orifice traversant 34 équipé d'un joint à lèvres 36 à sa partie interne qui est destiné à recevoir l'embout 9 du pistolet distributeur 8 et d'autre part d'un canal coudé 35 qui permet de relier la conduite de liaison 19 à la partie interne de la jauge 1.

Un tel bouchon 14' peut équiper un dispositif tel que représenté sur la figure 2 ou un dispositif tel que représenté sur la figure 3.

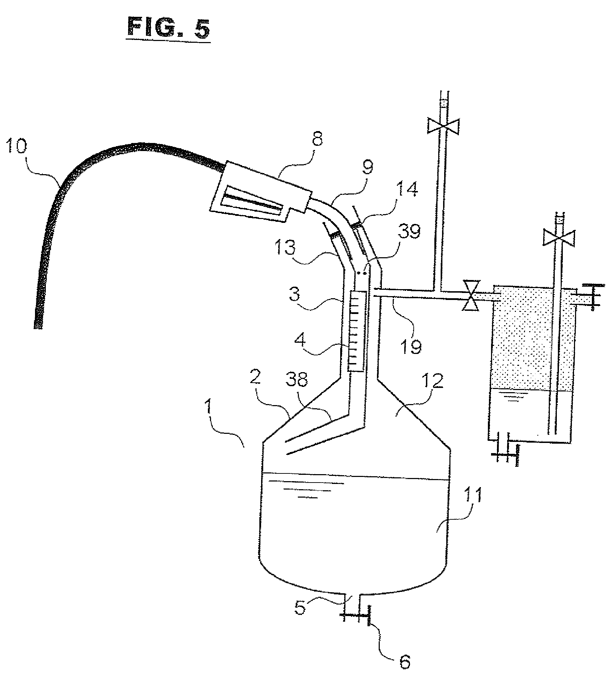

Selon la figure 5, l'élément connecteur 14 est associé à un tube plongeur 38 qui reçoit l'embout 9 du pistolet distributeur 8 et est équipé de trous de dégazage 39 à son extrémité supérieure.

Le tube plongeur 38 est en outre équipé à son extrémité inférieure d'un coudage permettant de projeter le jet de carburant distribué contre la paroi du corps de jauge 2.

Un tel tube plongeur 38 peut lui aussi s'adapter à un élément connecteur 14 équipant un dispositif tel que représenté sur la figure 2 ou un dispositif tel que représenté sur la figure 3.

La présence de ce tube plongeur 38 qui doit bien entendu être dimensionné pour recevoir l'embout 9 du pistolet distributeur 8 permet de limiter la formation de brume et de mousse lors du remplissage de la jauge 1.

### NOMENCLATURE

- 1.: Jauge
- 2.: Corps de jauge
- 3.: Col de jauge
- 4.: Graduation
- 5.: Ouverture de sortie
- 6.: Vanne de vidage
- 7.: Ouverture d'entrée
- 8.: Pistolet distributeur
- 9.: Embout
- 10.: Tuyau flexible
- 11.: Carburant
- 12.: Ciel de jauge
- 13.: Support
- 14.: Elément connecteur
- 15.: Réservoir additionnel
- 16.: Prise d'air d'équilibrage
- 17.: Vanne commandée
- 18a: Zone inférieure
- 18b: Zone à gradient
- 18c: Zone supérieure
- 19: Conduite de liaison
- 20: Vanne d'obturation
- 21: Réservoir de récupération
- 22: Réservoir additionnel
- 23: Prolongement
- 24: Vanne commandée
- 25: Carburant
- 26: Vapeurs de carburant
- 27: Prise d'air d'équilibrage
- 28: Vanne commandée
- 29: Prise d'air additionnelle
- 30: Vanne commandée
- 31: Ouverture de remplissage
- 32: Vanne manuelle
- 33: Ouverture de vidage
- 34: Vanne manuelle
- 35: Canal coudé
- 36: Joint à lèvres
- 37: Epaulement d'assemblage
- 38: Tube plongeur
- 39: Trous de dégazage
- 40: Eléments pare-flammes

## Revendications

1. Dispositif de jaugeage d'un appareil distributeur de carburant liquide, en particulier d'essence, branché d'une part sur un circuit de distribution de carburant relié à une cuve de stockage et équipé d'autre part d'un mesureur à pistons à course réglable coopérant avec un afficheur, ainsi que d'un tuyau flexible d'alimentation en carburant (10) relié à un pistolet distributeur (8) muni d'un embout (9), ce dispositif de jaugeage comportant une jauge (1) comprenant un corps de jauge (2) de volume prédéfini ainsi qu'un col de jauge (3) équipé d'une graduation (4) et dans lequel l'embout (9) du pistolet distributeur (8) peut être inséré pour permettre de remplir la jauge (1) de carburant (11),
- le col de jauge (3) étant équipé à son extrémité libre d'un élément connecteur (14, 14') permettant de garantir l'étanchéité entre l'atmosphère et la partie interne de la jauge (1), en particulier après insertion de l'embout (9) du pistolet distributeur (8) dans le col de jauge (3),
- la jauge (1) étant reliée, par l'intermédiaire d'une conduite de liaison (19) de préférence équipée d'une vanne de fermeture (20, 24), à un réservoir additionnel (15, 22) renfermant des vapeurs de carburant,
**caractérisé en ce que**,
- l'ensemble constitué par la jauge (1) et le réservoir additionnel (15, 22) est équipé d'une prise d'air d'équilibrage (16, 27) arrangée pour relier le ciel de jauge (12) avec l'atmosphère et munie d'une vanne d'obturation (17, 28), cette prise d'air d'équilibrage (16, 27) étant située à la partie supérieure du réservoir additionnel (15) ou sur la conduite de liaison (19).

2. Dispositif selon la revendication 1,
**caractérisé en ce que**
le corps de jauge (2) est équipé d'une ouverture de sortie (5) muni d'une vanne de vidage de jauge (6).

3. Dispositif selon l'une quelconque des revendications 1 et 2,
**caractérisé en ce que**
l'élément connecteur est constitué par un bouchon (14'), notamment en matériau synthétique, percé d'une part d'un orifice traversant (34), de préférence équipé d'un joint à lèvres (36), destiné à recevoir l'embout (9) du pistolet distributeur (8), et d'autre part d'un canal coudé (35) permettant de relier la conduite de liaison (19) à la partie interne de la jauge (1).

4. Dispositif selon l'une quelconque des revendications 1 à 3,
**caractérisé en ce que**
l'élément connecteur (14) est associé à un tube plongeur (38) destiné à recevoir l'embout (9) du pistolet distributeur (8) et équipé à son extrémité supérieure d'au moins un trou de dégazage (39) et à son extrémité inférieure d'un coudage permettant de projeter le jet de carburant distribué contre les parois du corps de jauge (2).

5. Dispositif selon l'une quelconque des revendications 1 à 4,
**caractérisé en ce que**
le réservoir additionnel (15, 22) est constitué par un élément rigide de volume constant réalisé en un matériau non altéré par les vapeurs de carburant.

6. Dispositif selon l'une quelconque des revendications 2 à 5,
**caractérisé en ce que**
- la conduite de liaison (19) débouche à la partie inférieure du réservoir additionnel (15) et est de préférence équipée d'un réservoir de récupération (21) de carburant liquide, et
- la prise d'air d'équilibrage (16) est située à la partie supérieure du réservoir additionnel (15).

7. Dispositif selon l'une quelconque des revendications 1 à 5,
**caractérisé en ce que**
- le réservoir additionnel (22) contient un volume prédéfini de carburant liquide (25), et
- la conduite de liaison (19, 23) débouche à la partie supérieure du réservoir additionnel (22) et est équipée de la prise d'air d'équilibrage (27) munie de la vanne d'obturation (28).

8. Dispositif selon la revendication 7,
**caractérisé en ce que**
le réservoir additionnel (22) est équipé d'une prise d'air additionnelle (29) plongeant dans le carburant (25) qui y est contenu et munie d'une vanne d'obturation additionnelle (30).

9. Dispositif selon l'une quelconque des revendications 1 à 8,
**caractérisé en ce que**
la prise d'air d'équilibrage (16, 27) et le cas échéant la prise d'air additionnelle (29) est(sont) équipée(s) d'un élément pare-flammes (40).

10. Dispositif selon l'une quelconque des revendications 1 à 9,
**caractérisé en ce que**
les vannes de fermeture et d'obturation (17, 20, 24, 28, 30) sont des vannes commandées reliées à un élément de contrôle électronique qui en contrôle l'ouverture et la fermeture.

11. Procédé mis en oeuvre lors de l'utilisation d'un dispositif selon l'une quelconque des revendications 1 à 10,
**caractérisé par** les étapes suivantes :
- lors d'une étape préliminaire, on remplit la jauge (1) et le réservoir additionnel (15, 22) de vapeurs de carburant puis on isole la jauge (1) et le réservoir additionnel (15, 22) l'un de l'autre et vis-à-vis de l'atmosphère,
- lors d'une opération de jaugeage, on insère l'embout (9) du pistolet distributeur (8) dans le col de jauge (3) équipé de l'élément connecteur (14), puis on ouvre la vanne d'obturation (17, 28) de la prise d'air d'équilibrage (16, 27) et on relie la jauge (1) à l'atmosphère,
- on remplit la jauge (1) de carburant (11) de sorte que les vapeurs de carburant déplacées soient évacuées par la prise d'air d'équilibrage (16, 27),
- on lit le volume ainsi introduit dans la jauge (1) sur la graduation (4) équipant le col de jauge (3) et on compare ce volume lu au volume affiché sur l'afficheur de l'appareil distributeur de façon à pouvoir régler la course des pistons du mesureur en cas de différence entre ces volumes, puis
- on vide la jauge (1) de sorte que les vapeurs de carburant renfermées dans le réservoir additionnel (15, 22) pénètrent dans celle-ci, et
- on isole la jauge (1) et le réservoir additionnel (15, 22) l'un de l'autre et vis-à-vis de l'atmosphère.

12. Procédé selon la revendication 11 mis en oeuvre lors de l'utilisation d'un dispositif selon la revendication 6,
**caractérisé en ce que**
lors d'une opération de jaugeage, on ouvre la vanne de fermeture (20) de la conduite de liaison (19) de sorte que les vapeurs de carburant déplacées lors du remplissage de la jauge (1) soient refoulées vers le réservoir additionnel (15) puis évacuées par la prise d'air d'équilibrage (16).

13. Procédé selon la revendication 11 mis en oeuvre lors de l'utilisation d'un dispositif selon la revendication 8,
**caractérisé par** les étapes suivantes :
- lors de l'étape préliminaire, on introduit dans le réservoir additionnel (22) un volume prédéfini de carburant liquide (25), et
- lors de l'étape de vidage de la jauge (1), on ferme la vanne d'obturation (28) de la prise d'air d'équilibrage (27) et on ouvre la vanne de fermeture (24) de la conduite de liaison (19, 23) ainsi que la vanne d'obturation (30) de la prise d'air additionnelle (29) de sorte que les vapeurs de carburant (26) renfermées dans le réservoir additionnel (22) pénètrent dans la jauge (1) et que l'air aspiré de l'extérieur par la prise d'air additionnelle (27) par équilibrage des pressions soit introduit sous forme de bulles dans le carburant liquide (25) renfermé dans le réservoir additionnel (22) où il se sature en vapeurs de carburant.

## Patentansprüche

1. Vorrichtung zum Eichen eines Geräts zur Abgabe von flüssigem Kraftstoff, insbesondere Benzin, die einerseits an einen Kraftstoffausgabekreislauf angeschlossen ist, der mit einem Aufbewahrungstank verbunden ist, und die andererseits mit Folgendem versehen ist: einer Messeinrichtung mit Kolben mit einstellbarem Hub, die mit einer Anzeigeeinrichtung zusammenwirkt, sowie mit einem flexiblen Kraftstoffzufuhrschlauch (10), der mit einer Zapfpistole (8) verbunden ist, die mit einem Ansatz (9) ausgestattet ist, wobei diese Eichvorrichtung ein Eichmaß (1) umfasst, das Folgendes aufweist: einen Eichmaßkörper (2) mit vordefiniertem Volumen und einen Eichmaßhals (3), der mit einer Maßeinteilung (4) versehen ist und in den der Ansatz (9) der Zapfpistole (8) eingeführt werden kann, um das Eichmaß (1) mit Kraftstoff (11) füllen zu können, wobei
- der Eichmaßhals (3) an seinem freien Ende mit einem Anschlusselement (14, 14') versehen ist, das es ermöglicht, die Dichtigkeit zwischen der Atmosphäre und dem inneren Teil des Eichmaßes (1) insbesondere nach dem Einführen des Ansatzes (9) der Zapfpistole (8) in den Eichmaßhals (3) zu garantieren,
- das Eichmaß (1) über eine Verbindungsleitung (19), die vorzugsweise mit einem Absperrventil (20, 24) versehen ist, mit einem zusätzlichen Behälter (15, 22) verbunden ist, der Kraftstoffdämpfe enthält,
**dadurch gekennzeichnet, dass**
- die aus dem Eichmaß (1) und dem zusätzlichen Behälter (15, 22) gebildete Einheit mit einer Ausgleichsluftzufuhr (16, 27) versehen ist, die dafür angeordnet ist, das Eichmaßgewölbe (12) mit der Atmosphäre zu verbinden, und die mit einem Verschlussventil (17, 28) ausgestattet ist, wobei diese Ausgleichsluftzufuhr (16, 27) am oberen Teil des zusätzlichen Behälters (15) oder an der Verbindungsleitung (19) angeordnet ist.

2. Vorrichtung nach Anspruch 1,
**dadurch gekennzeichnet, dass**
der Eichmaßkörper (2) mit einer Auslassöffnung (5) versehen ist, die mit einem Eichmaßentleerungsventil (6) ausgestattet ist.

3. Vorrichtung nach einem der Ansprüche 1 und 2,
**dadurch gekennzeichnet, dass**
das Anschlusselement durch einen Pfropfen (14') insbesondere aus synthetischem Material gebildet ist, der von Folgendem durchbohrt wird:
einerseits von einer Durchgangsöffnung (34), die vorzugsweise mit einer Lippendichtung (36) versehen ist und dazu bestimmt ist, den Ansatz (9) der Zapfpistole (8) aufzunehmen, und andererseits von einem knieförmigen Kanal (35), der es ermöglicht, die Verbindungsleitung (19) mit dem inneren Teil des Eichmaßes (1) zu verbinden.

4. Vorrichtung nach einem der Ansprüche 1 bis 3,
**dadurch gekennzeichnet, dass**
das Anschlusselement (14) mit einem Tauchrohr (38) verbunden ist, das dazu bestimmt ist, den Ansatz (9) der Zapfpistole (8) aufzunehmen und das an seinem oberen Ende mit wenigstens einem Entgasungsloch (39) und an seinem unteren Ende mit einem Knie versehen ist, das es ermöglicht, den abgegebenen Kraftstoffstrahl gegen die Wände des Eichmaßkörpers (2) zu spritzen.

5. Vorrichtung nach einem der Ansprüche 1 bis 4,
**dadurch gekennzeichnet, dass**
der zusätzliche Behälter (15, 22) durch ein starres Element mit konstantem Volumen gebildet ist, das aus einem Material hergestellt ist, das durch die Kraftstoffdämpfe nicht verändert wird.

6. Vorrichtung nach einem der Ansprüche 2 bis 5,
**dadurch gekennzeichnet, dass**
- die Verbindungsleitung (19) im unteren Teil des zusätzlichen Behälters (15) mündet und vorzugsweise mit einem Behälter (21) zur Rückgewinnung von flüssigem Kraftstoff versehen ist, und
- die Ausgleichsluftzufuhr (16) am oberen Teil des zusätzlichen Behälters (15) angeordnet ist.

7. Vorrichtung nach einem der Ansprüche 1 bis 5,
**dadurch gekennzeichnet, dass**
- der zusätzliche Behälter (22) ein vordefiniertes Volumen an flüssigem Kraftstoff (25) enthält, und
- die Verbindungsleitung (19, 23) im oberen Teil des zusätzlichen Behälters (22) mündet und mit der Ausgleichsluftzufuhr (27) versehen ist, die mit dem Verschlussventil (28) ausgestattet ist.

8. Vorrichtung nach Anspruch 7,
**dadurch gekennzeichnet, dass**
der zusätzliche Behälter (22) mit einer zusätzlichen Luftzufuhr (29) versehen ist, die in den darin enthaltenen Kraftstoff (25) getaucht ist und die mit einem zusätzlichen Verschlussventil (30) ausgestattet ist.

9. Vorrichtung nach einem der Ansprüche 1 bis 8,
**dadurch gekennzeichnet, dass**
die Ausgleichsluftzufuhr (16, 27) und gegebenenfalls die zusätzliche Luftzufuhr (29) mit einem Flammschutzelement (40) versehen ist (sind).

10. Vorrichtung nach einem der Ansprüche 1 bis 9,
**dadurch gekennzeichnet, dass**
die Absperr- und Verschlussventile (17, 20, 24, 28, 30) gesteuerte Ventile sind, die mit einem elektronischen Steuerungselement verbunden sind, das ihre Öffnung und Schließung steuert.

11. Verfahren, das bei der Verwendung einer Vorrichtung nach einem der Ansprüche 1 bis 10 angewendet wird,
**gekennzeichnet durch** die folgenden Schritte:
- bei einem einleitenden Schritt werden das Eichmaß (1) und der zusätzliche Behälter (15, 22) mit Kraftstoffdämpfen gefüllt, anschließend werden das Eichmaß (1) und der zusätzliche Behälter (15, 22) voneinander und gegenüber der Atmosphäre isoliert,
- bei einem Eichvorgang wird der Ansatz (9) der Zapfpistole (8) in den Eichmaßhals (3) eingeführt, der mit dem Anschlusselement (14) versehen ist, anschließend wird das Verschlussventil (17, 28) der Ausgleichsluftzufuhr (16, 27) geöffnet und das Eichmaß (1) mit der Atmosphäre verbunden,
- das Eichmaß (1) wird mit Kraftstoff (11) gefüllt, so dass die abgegebenen Kraftstoffdämpfe **durch** die Ausgleichsluftzufuhr (16, 27) abgeleitet werden,
- das auf diese Weise in das Eichmaß (1) eingefüllte Volumen wird auf der Maßeinteilung (4) abgelesen, mit welcher der Eichmaßhals (3) versehen ist, und dieses abgelesene Volumen wird mit dem Volumen verglichen, das auf der Anzeigeeinrichtung des Abgabegeräts angezeigt wird, um den Hub der Kolben der Messeinrichtung im Fall einer Differenz zwischen diesen Volumina einstellen zu können, anschließend
- wird das Eichmaß (1) entleert, so dass die im zusätzlichen Behälter (15, 22) eingeschlossenen Kraftstoffdämpfe in dieses eindringen, und
- das Eichmaß (1) und der zusätzliche Behälter (15, 22) werden voneinander und gegenüber der Atmosphäre isoliert.

12. Verfahren nach Anspruch 11, das bei der Verwendung einer Vorrichtung nach Anspruch 6 angewendet wird,
**dadurch gekennzeichnet, dass**
bei einem Eichvorgang das Absperrventil (20) der Verbindungsleitung (19) geöffnet wird, so dass die beim Füllen des Eichmaßes (1) abgegebenen Kraftstoffdämpfe zum zusätzlichen Behälter (15) verdrängt werden und anschließend durch die Ausgleichsluftzufuhr (16) abgeleitet werden.

13. Verfahren nach Anspruch 11, das bei der Verwendung einer Vorrichtung nach Anspruch 8 angewendet wird,
**gekennzeichnet durch** die folgenden Schritte:
- beim einleitenden Schritt wird in den zusätzlichen Behälter (22) ein vordefiniertes Volumen an flüssigem Kraftstoff (25) eingeleitet, und
- beim Schritt des Leerens des Eichmaßes (1) wird das Verschlussventil (28) der Ausgleichsluftzufuhr (27) geschlossen und das Absperrventil (24) der Verbindungsleitung (19, 23) sowie das Verschlussventil (30) der zusätzlichen Luftzufuhr (29) geschlossen, so dass die im zusätzlichen Behälter (22) eingeschlossenen Kraftstoffdämpfe (26) in das Eichmaß (1) eindringen und die von der zusätzlichen Luftzufuhr (27) **durch** Druckausgleich von außen angesaugte Luft in Form von Blasen in den im zusätzlichen Behälter (22) eingeschlossenen flüssigen Kraftstoff (25) eingeleitet wird, wo sie mit Kraftstoffdämpfen gesättigt wird.

## Claims

1. Gauging device for a dispenser of liquid fuel, in particular petrol, which is connected to a fuel dispensing circuit, which in turn is connected to a storage vessel, and has an adjustable-stroke piston meter which interacts with a display device, and a flexible hose (10) which is intended for supplying fuel and is connected to a dispensing nozzle (8) provided with an end piece (9), this gauging device including a gauge (1) which comprises a gauge body (2) having a predetermined volume and a gauge neck (3) which has a scale (4) and into which the end piece (9) of the dispensing nozzle (8) can be inserted so as to enable the gauge (1) to be filled with fuel (11),
- the gauge neck (3) having at its free end a connector element (14, 14') for ensuring a seal between the atmosphere and the inner portion of the gauge (1), in particular once the end piece (9) of the dispensing nozzle (8) has been inserted into the gauge neck (3),
- the gauge (1) being connected, by means of a connection tube (19) which preferably has a shut-off valve (20, 24), to an additional tank (15, 22) which contains fuel vapours, **characterised in that**
- the assembly consisting of the gauge (1) and the additional tank (15, 22) has a balance air intake (16, 27) which is arranged to connect the headspace (12) of the gauge to the atmosphere and is provided with a sealing valve (17, 28), this balance air intake (16, 27) being located at the upper portion of the additional tank (15) or on the connection tube (19).

2. Device according to claim 1, **characterised in that** the gauge body (2) has an outlet opening (5) which is provided with a gauge discharge valve (6).

3. Device according to either claim 1 or claim 2, **characterised in that** the connector element consists of a plug (14'), in particular made of synthetic material, which is perforated by both a through-aperture (34), preferably having a lip seal (36), which is intended for receiving the end piece (9) of the dispensing nozzle (8), and a bent channel (35) for connecting the connection tube (19) to the inner portion of the gauge (1).

4. Device according to any of claims 1 to 3, **characterised in that** the connector element (14) is attached to a dip tube (38) which is intended for receiving the end piece (9) of the dispensing nozzle (8) and has, at its upper end, at least one degassing hole (39) and, at its lower end, a bent portion for discharging the fuel stream dispensed against the walls of the gauge body (2).

5. Device according to any of claims 1 to 4, **characterised in that** the additional tank (15, 22) consists of a rigid element having a constant volume which is made of a material which is not affected by the fuel vapours.

6. Device according to any of claims 2 to 5, **characterised in that**
- the connection tube (19) leads into the lower portion of the additional tank (15) and preferably has a tank (21) for collecting liquid fuel, and
- the balance air intake (16) is located at the upper portion of the additional tank (15).

7. Device according to any of claims 1 to 5, **characterised in that**
- the additional tank (22) contains a predetermined volume of liquid fuel (25), and
- the connection tube (19, 23) leads into the upper portion of the additional tank (22) and has the balance air intake (27) which is provided with the sealing valve (28).

8. Device according to claim 7, **characterised in that** the additional tank (22) has an additional air intake (29) which dips into the fuel (25) contained therein and is provided with an additional sealing valve (30).

9. Device according to any of claims 1 to 8, **characterised in that** the balance air intake (16, 27) and, where necessary, the additional air intake (29) has/have a flame-arresting element (40).

10. Device according to any of claims 1 to 9, **characterised in that** the shut-off and sealing valves (17, 20, 24, 28, 30) are controlled valves which are connected to an electronic control element which controls the opening and closure thereof.

11. Method carried out when using of a device according to any of claims 1 to 10, **characterised by** the following steps:
- in a preliminary step, filling the gauge (1) and the additional tank (15, 22) with fuel vapours and then isolating the gauge (1) and the additional tank (15, 22) from one another and from the atmosphere,
- during a gauging operation, inserting the end piece (9) of the dispensing nozzle (8) into the gauge neck (3) having the connector element (14), subsequently opening the sealing valve (17, 28) of the balance air intake (16, 27) and connecting the gauge (1) to the atmosphere,
- filling the gauge (1) with fuel (11) such that the displaced fuel vapours are removed by the balance air intake (16, 27),
- taking a reading from the scale (4) provided on the gauge neck (3) of the volume fed into the gauge (1) in this manner, and comparing this read volume with the volume displayed on the display device of the dispenser in such a manner that the stroke of the pistons of the meter can be adjusted if there is a difference between these volumes, subsequently
- emptying the gauge (1) such that the fuel vapours contained in the additional tank (15, 22) penetrate said gauge, and
- isolating the gauge (1) and the additional tank (15, 22) from one another and from the atmosphere.

12. Method according to claim 11 carried out when using a device according to claim 6, **characterised in that**, during a gauging operation, the shut-off valve (20) of the connection tube (19) is opened such that the fuel vapours that were displaced when the gauge (1) was being filled are pushed back towards the additional tank (15) and then removed by the balance air intake (16).

13. Method according to claim 11 carried out when using a device according to claim 8, **characterised by** the following steps:
- in a preliminary step, feeding a predetermined volume of liquid fuel (25) into the additional tank (22), and
- in a step of emptying the gauge (1), closing the sealing valve (28) of the balance air intake (27) and opening the shut-off valve (24) of the connection tube (19, 23) and the sealing valve (30) of the additional air intake (29) such that the fuel vapours (26) contained in the additional tank (22) penetrate the gauge (1), and the air drawn in from outside by the additional air intake (27) by means of balancing out the pressures, is fed, in the form of bubbles, into the liquid fuel (25) contained in the additional tank (22) where said air is saturated with fuel vapours.
